# EUROPÄISCHE PATENTSCHRIFT

(11) **EP 1 223 205 B1**
(45) Veröffentlichungstag und Bekanntmachung des Hinweises auf die Patenterteilung: **04.04.2007**
(21) Anmeldenummer: 01129662.1
(22) Anmeldetag: 13.12.2001
(51) Int. Cl.: C09J 7/02, C09J 109/08

(54) **Klebebänder**
Adhesive tapes
Rubans adhésifs

(30) Priorität: 13.01.2001 DE 10101335
(43) Veröffentlichungstag der Anmeldung: 17.07.2002
(73) Patentinhaber: tesa AG, 20253 Hamburg (DE)
(72) Erfinder: Spies, Manfred, Dr., 24576 Bad Bramstedt (DE); Kozaczka, Zygmunt, 22299 Hamburg (DE)

(56) Entgegenhaltungen:
- EP-A- 0 688 843
- US-A- 2 956 904
- US-A- 3 149 997

## Beschreibung

Die Erfindung betrifft die Entwicklung von klebharzfreien Haftklebebändern mit kohäsiven Massesystemen auf Basis von Styrol/Butadien Latices mit einem hohen Butadiengehalt und Naturkautschuklatex.

Die klassischen Klebemassesyteme für Haftklebebänder basieren im wesentlichen auf Naturkautschuk, Styrol-Blockcopolymeren und Polyacrylaten. Für Anwendungen, bei denen spezielle Anforderungen an ein reversibles Verhalten gestellt werden, kommen auch Ethylvinylacetate oder Polyisobutylene in Betracht.

Styrol/Butadien Latices werden im Bereich der "Pressure Sensitive Adhesives" seit vielen Jahren zur Imprägnierung und Stabilisierung von Trägermaterialien eingesetzt. Hierbei stehen Papiere Gewebe und Vliese im Vordergrund. Die Imprägnierung oder Beschichtung darf aufgrund der Anwendung keinesfalls klebrig sein. Die für diese Anwendung eingesetzten Styrol/Butadien Copolymere müssen daher einen relativ hohen Anteil an hartmachenden Monomeren enthalten, aber andererseits genügend weichmachendes Monomer, so daß das Copolymer insgesamt noch elastisch ist. Styrol/Butadien Latices mit einem Butadiengehalt von etwa 25-55% erfüllen diese Anforderung sehr gut. Filme dieser Copolymeren sind in Abhängigkeit des Butadiengehaltes mäßig elastisch bis elastisch, und nicht klebend. Derartige Copolymere sind schon seit vielen Jahren auf dem Rohstoffmarkt verfügbar (Butofan^{®}-Typen der BASF, diverse Typen von Dow und Synthomer). Bedingt durch ihre Herstellung enthalten derartige Latices bzw. Dispersionen Emulgator-Systeme, um eine Kompatibilität zwischen der organischen und der wässrigen Phase herzustellen.

Styrol/Butadien Copolymere wurden in der Vergangenheit auch als Basispolymere für Etikettenmassen eingesetzt. Im Bereich der Etiketten kommt der Kohäsion häufig sekundäre Bedeutung zu, so daß schwach klebende Systeme nach Compoundierung mit üblichen Tackyfiern (Harzdispersionen) in vielen Fällen ausreichende Eigenschaften zeigen.

Styrol Butadien Copolymere wurden auch in Kombination mit Naturkautschuklatices beschrieben. Eine Übersicht hierzu findet sich in: Donatas Satas, Handbook of Pressure Sensitive Adhesive Technology, 3. Edition, *Natural Rubber Adhesives by G. L. Butler (S. 276-283).*

Osari beschreibt in EP-A1-688 843 die Verwendung wässriger Emulsionen auf Basis von Naturkautschuklatex zur Herstellung von Haftklebebändern. Der Zusatz von Styrol/Butadien Dispersionen mit einem üblichen Butadiengehalt (im Bereich von ca. 25-55%) dient hierbei vorwiegend der Stabilisierung des scherinstabilen Naturkautschuklatex, und der Viskositätseinstellung.

Als Gerüstpolymere für kohäsive Haftklebemassen sind übliche Styrol/Butadien Copolymere mit einem Butadiengehalt zwischen 25 und 55% nur mangelhaft geeignet, da diese immer mit z. TI. erheblichen Mengen an Tackyfierharzen klebrig gemacht werden müssen, was mit einem weitreichenden Kohäsionsverlust verbunden ist. Dieses schließt eine Anwendung für Klebebänder, für die kohäsive Klebemassen benötigt werden, aus.

Styrol/Butadien Copolymere sind aber aufgrund der Polymerstruktur und des Preisniveaus als Gerüstpolymere für anspruchsvolle Haftklebemassen grundsätzlich von Interesse.

Aufgabe der Erfindung war es hier Abhilfe zu schaffen, und eine Styrol/Butadien basierende Klebemasse bereit zu stellen, die den Mängel niedriger Kohäsion nicht aufweist, und mit der ein Haftklebeband gemacht werden kann, das auch für reversible Anwendungen in Betracht kommt.

Gelöst wurde die Aufgabe durch Verwendung einer klebharzfreien Styrol/Butadien Dispersion mit einem hohen Butadiengehalt, die mit Naturkautschuklatex abgemischt wurde. Zu dem so erhaltenen Compound können ggf. weitere Coagenzien wie z. B. Alterungsschutzmittel, UV-Schutzmittel Füllstoffe oder Emulgatoren zugemischt werden, um den Alterungsschutz und die klebtechnische Daten weiter der Anwendung anzupassen. Nach Beschichtung der Klebemasse auf einem Polymer- oder Papierträger ist ein Haftklebeband gemäß den Ansprüchen erhältlich, das die Anforderungen eines Klebebandes mit kohäsiven Eigenschaften erfüllt, und für z. B. reversible Anwendungen geeignet ist. Derartige Produkte können im Bereich des Oberflächenschutzes angewendet werden. Zudem werden negative Einflüsse auf die Kohäsion der Klebemassen durch Klebharze vermieden. Auch Rückstände aufgrund von Klebharzen werden damit beim Wiederablösen vermieden.

### Klebemassen:

Die Homopolymerisation von Styrol in wässrigem Medium liefert Polymere, die aufgrund des hohen Tg auch für Lackanwendungen eine nur sehr eingeschränkte Bedeutung hat. Die Copolymerisation von Styrol mit etwa 35-45 % Butadien in wässrigem Medium liefert Copolymere, die filmbildend sind, und bei denen eine Mindestfilmbildetemperatur von etwa 0°C erreichbar sind, so daß diese Systeme im Bereich der Grundierung, Lackierung, Bindemittel, und der allgemeinen Modifizierung eingesetzt werden können. Styrol/Butadien Dispersionen werden allgemein durch den Einbau geringer Mengen carboxylhaltiger Gruppen stabilisiert, was gleichzeitig die Haftung auf vielen Untergründen verbessert. Als Klebemassen für die Erfindung können insbesondere carboxylierte Styrol/Butadien-Copolymer-Dispersionen eingesetzt werden mit einem Butadienanteil von 55-95%, vorzugsweise 60-85%, bezogen auf den Gesamtfeststoffanteil an Styrol und Butadien, die im Gemisch mit Naturkautschuklatex eine hevorragende Eignung als Klebemassen für reversible Klebebänder zeigen. Carboxylierte derartige Copolymere enthalten insbesondere unter 10%, bevorzugt unter 5% bezogen auf den Monomergehalt an carboxylhaltigen Comonomer, insbesondere Acrylsäure, im Copolymer.

Erfindungsgemäße Styrol/Butadien-Dispersionstypen mit einen einem Butadiengehalt >60% sind z.B. von Dow erhältlich.

Als Naturkautschuklatexkomponente kommen sowohl Latices vom Low-Ammonia Typ, als auch solche vom High-Ammonia Typ in Betracht. Bevorzugen sind Latices vom Low-Ammonia Typ. Bezogen auf den Gesamtfeststoffgehalt an Styrol/Butadien Copolymer und Naturkautschuklatex sollte der Naturkautschukanteil im Bereich 5-80%, vorzugsweise 20-50% liegen. Zur gezielten Einstellung der klebtechnischen Eigenschaften können auch Mischungen aus unterschiedlichen Naturkautschuklatices eingesetzt werden. Zur Verbesserung des Alterungsverhaltens können Dispersionen üblicher Alterungsschutz- und UV-Schutzmittel zugesetzt werden, die aus dem Bereich der Elastomeren hinreichend bekannt sind.

Weiterhin können bei Bedarf weiterer Additive zur Anpassung der Produkteigenschaften zugesetzt werden, wie z.B. Füllstoffe oder Emulgatoren z.B. vom Typ alkoxylierter Alkylphenole. Mit diesen Additiven gelingt es, die klebtechnischen Eigenschaften weiter in gewünschter Weise zu beeinflussen.
Die Einstellung der Adhäsion/Kohäsion Balance kann bei Bedarf durch chemische Vernetzung über die vorhandenen Carboxylgruppen durch zugesetzte Vernetzungsagenzien wie z.B. Aluminium- oder Titanchelat erfolgen. Eine strahlenchemische Vernetzung ist im Gegensatz zu vielen Styrol-Blockcopolymeren aufgrund des ausreichend hohen Molekulargewichtes ebenfalls möglich.

Der Klebemasseauftrag beträgt 10-120g/m², bevorzugt 15-40g/m².

### Trägermaterialien:

Als Trägermaterialien für die Erfindung kommen alle üblichen Trägermaterialien in Betracht. Hierbei handelt es sich im wesentlichen um Folien und Papiere, die aufgrund ihrer Eigenschaften und des Herstellungs- bzw. Nachbehandlungsprozeßes die geforderten mechanischen Eigenschaften der Anwendung aufweisen.

Im Falle der Folien handelt es sich im wesentlichen um Polyethylen, Polypropylen, Polyvinylchlorid Polyester und andere für die Anwendung üblichen Polymere und Copolymere, die sowohl einschichtig als auch mehrschichtig eingesetzt werden können. Bei mehrschichtigen Systemen kann auch die Zusammensetzung und die Dicke der einzelnen Schichten variieren.

Es können sowohl Blas-, als auch Flachfolie eingesetzt werden.

Die Dicken der Folien liegen zwischen 10 und 250 µm, bevorzugt zwischen 20 und 120 µm.

Um eine ausreichende Haftung der Klebemasse auf dem Trägermaterial sicherzustellen muß die Oberflächenenergie der zu beschichtenden Seite innerhalb eines definierten Bereiches liegen. Dieses kann entweder über eine zusätzliche Beschichtung mit einem Primer gewährleistet werden, oder über eine Oberflächenbehandlung. Bevorzugt wird eine Corona- oder Flammenvorbehandlung, mit der die gewünschten Oberflächenenergien erreicht werden können. Die Oberflächenenergien sollten in einem Bereich von 25-50mN/m, bevorzugt 30-45 mN/m liegen.

Als Trägermaterialien kommen desweiteren imprägnierte und hochgeleimte definiert gekreppte Papiere mit Reißfestigkeiten in Betracht, die den gewünschten Anforderungen genügen. In Abhängigkeit der gewünschten Anwendung können sowohl Papiere mit höherer Längs-Dehnbarkeit als Quer-Dehnbarkeit eingesetzt werden, als auch Papiere mit höherer Quer-Dehnbarkeit als Längs-Dehnbarkeit, sowohl in gebleichter, als auch in der umweltfreundlichen ungebleichten Version.

Alle Prozentangaben beziehen sich auf Gewichts-%.

### Beispiele:

### Beispiel 1:

Eine Dispersionsklebemasse bestehend aus 75% einer carboxylierten Styrol/Butadien Dispersion mit einem Butadiengehalt von über 70% (XZ 91979.00, Styrol/Butadien Dispersion der Firma Dow) und 25% Naturkautschuklatex (Zentrifugenlatex Low-Ammonia) wird mit einem Drahtrakel kontinuierlich mit einer Schichtdicke von 25 g/m² auf einer Polyester-Folie beschichtet. Die Prozentangaben sind auf den Feststoff-Gehalt bezogen.

### Technische Bedingungen:

| | |
|---|---|
| Maschine: | Technikumsbeschichtungsanlage |
| Auftragswerk: | Drahtrakel |
| Trägerbahngeschwindigkeit: | 3,5 m/min |

Das beschichtete Material wird anschließend thermisch getrocknet:

| | |
|---|---|
| Trocknung (Schwebedüsentrockner): | Zone 1: 100 °C |
| | Zone 2: 120 °C |

Das Ballenmaterial wird anschließend zu Rollen geschnitten.

### Klebtechnische Daten (Frischzustand):

Klebkraft/Stahl: 1,2N/cm
Scherstandzeit/Stahl(13x20mm, 1kp): > 20.000min:
Microscherweg (40°C, 3N,): 7µm
Thermoscherweg (5°C/min, 3N, in °C): > 200°C

### Beispiel 2:

Eine Dispersionsklebemasse bestehend aus 50% einer carboxylierten Styrol/Butadien Dispersion mit einem Butadiengehalt von über 70% (XZ 91979.00, Styrol/Butadien Dispersion der Firma Dow) und 50% Naturkautschuklatex (Zentrifugenlatex Low Ammonia) wird mit einem Drahtrakel kontinuierlich mit einer Schichtdicke von 25 g/m² auf einer Polyester-Folie beschichtet. Die Prozentangaben sind auf den Feststoffgehalt bezogen.

### Technische Bedingungen:

| | |
|---|---|
| Maschine: | Technikumsbeschichtungsanlage |
| Auftragswerk: | Drahtrakel |
| Trägerbahngeschwindigkeit: | 3,5 m/min |

Das beschichtete Material wird anschließend thermisch getrocknet:

| | |
|---|---|
| Trocknung (Schwebedüsentrockner): | Zone 1: 100 °C |
| | Zone 2: 120 °C |

Das Ballenmaterial wird anschließend zu Rollen geschnitten.

### Klebtechnische Daten (Frischzustand):

Klebkraft/Stahl: 0,55N/cm
Scherstandzeit/Stahl(13x20mm, 1kp): > 20.000min:
Microscherweg (40°C, 3N,): 5µm
Thermoscherweg (5°C/min, 3N, in °C): > 200°C

## Patentansprüche

1. Klebeband mit einem Träger und einer klebharzfreien, kohäsiven Klebemasse, **dadurch gekennzeichnet, dass** die Klebemasse klebharzfrei und als wässrige Styrol/Butadien-Copolymer-Dispersion mit einem Butadiengehalt größer 55 Gewichts-% in Abmischung mit Naturkautschuklatex auf dem Träger beschichtet und anschließend getrocknet ist.

2. Klebeband nach Anspruch 1 **dadurch gekennzeichnet, dass** der Naturkautschuklatex sowohl vom Typ Low-Ammonia, als auch vom Typ High-Ammonia sein kann.

3. Klebeband nach Anspruch 1 **dadurch gekennzeichnet, dass** auch Gemische unterschiedlicher Styrol/Butadien- und Naturkautschuklatex-Typen einsetzbar sind.

4. Klebeband nach Anspruch 1 **dadurch gekennzeichnet, dass** die Klebemasse durch zugesetzte übliche Vernetzer (z.B. Aluminium- oder Titanchelat, weitere Metallkomplexe, Isocyanate, Epoxid, etc.) chemisch vernetzbar ist.

5. Klebeband nach Anspruch 1 **dadurch gekennzeichnet, dass** die Klebemasse physikalisch vernetzbar ist, insbesondere durch z.B. ESH.

6. Klebeband nach Anspruch 1 **dadurch gekennzeichnet, dass** zur Verbesserung der Alterungsbeständigkeit Alterungsschutz- und UV-Schutzmittel eingesetzt werden können.

7. Klebeband nach Anspruch 1 **dadurch gekennzeichnet, dass** der Träger ein Polyolefin, Polyester, PVC oder ein Papier ist.

8. Klebeband nach Anspruch 1 **dadurch gekennzeichnet, dass** der Masseauftrag der Klebemasse 10-120 g/m² beträgt.

9. Klebeband nach Anspruch 1 **dadurch gekennzeichnet, dass** zur Verbesserung der Masseverankerung eine physikalische Oberflächenbehandlung des Trägers erfolgt oder der Träger mit einem Primer vorbehandelt ist.

10. Klebeband nach Anspruch 1, **dadurch gekennzeichnet, dass** die Styrol/Butadien-Dispersion vom Typ einer carboxylierten Styrol/Butadien-Dispersion ist.

11. Klebeband nach Anspruch 1, **dadurch gekennzeichnet, dass** der Anteil an Naturkautschuklatex im Bereich 5 - 80%, insbesondere 20 - 50% bezogen auf den Gesamtfeststoffgehalt liegt.

## Claims

1. Adhesive tape having a backing and a cohesive adhesive composition free from tackifier resin, **characterized in that** the adhesive composition is free from tackifier resin and is an aqueous styrene-butadiene copolymer dispersion having a butadiene content of more than 55% by weight in a blend with natural rubber latex and has been coated onto the backing and then dried.

2. Adhesive tape according to Claim 1, **characterized in that** the natural rubber latex may be either of the low ammonia or of the high ammonia type.

3. Adhesive tape according to Claim 1, **characterized in that** mixtures of different styrene-butadiene types and natural rubber latex types may also be used.

4. Adhesive tape according to Claim 1, **characterized in that** the adhesive composition is chemically crosslinkable by means of added customary crosslinkers (e.g., aluminium chelate or titanium chelate, further metal complexes, isocyanates, epoxy, etc.).

5. Adhesive tape according to Claim 1, **characterized in that** the adhesive composition is physically crosslinkable, in particular by means, for example, of EBC.

6. Adhesive tape according to Claim 1, **characterized in that** the ageing stability may be improved by using ageing inhibitors and UV stabilizers.

7. Adhesive tape according to Claim 1, **characterized in that** the backing is a polyolefin, polyester, PVC or paper.

8. Adhesive tape according to Claim 1, **characterized in that** the application rate of the adhesive composition is 10-120 g/m².

9. Adhesive tape according to Claim 1, **characterized in that** to improve the anchoring of the composition the backing is physically surface treated or is pretreated with a primer.

10. Adhesive tape according to Claim 1, **characterized in that** the styrene-butadiene dispersion is of the type of a carboxylated styrene-butadiene dispersion.

11. Adhesive tape according to Claim 1, **characterized in that** the fraction of natural rubber latex is in the range 5-80%, in particular 20-50%, based on the total solids content.

## Revendications

1. Ruban adhésif comportant un support et une masse adhésive cohésive exempte de résine adhérisante, **caractérisé en ce que** la masse adhésive est exempte de résine adhérisante et est enduite sur le support en tant que dispersion aqueuse de copolymère de styrène /butadiène ayant une teneur en butadiène de plus de 55% en poids, en mélange avec un latex de caoutchouc naturel, et est ensuite séchée.

2. Ruban adhésif suivant la revendication 1, **caractérisé en ce que** le latex de caoutchouc naturel peut être tant du type à faible teneur en ammoniac ("low ammonia") que du type à haute teneur en ammoniac ("high ammonia").

3. Ruban adhésif suivant la revendication 1, **caractérisé en ce que** l'on peut aussi mettre en oeuvre des mélanges de différents types de styrène / butadiène et de latex de caoutchouc naturel.

4. Ruban adhésif suivant la revendication 1, **caractérisé en ce que** la masse adhésive peut être chimiquement réticulée par addition de réticulants usuels (par exemple des chélates d'aluminium ou de titane, d'autres complexes métalliques, d'isocyanates, d'époxydes etc.).

5. Ruban adhésif suivant la revendication 1, **caractérisé en ce que** la masse adhésive peut être physiquement réticulée, en particulier par durcissement par faisceau électronique (ESH).

6. Ruban adhésif suivant la revendication 1, **caractérisé en ce que** l'on peut mettre en oeuvre, pour améliorer la résistance au vieillissement, des agents de protection contre le vieillissement et de protection contre les UV.

7. Ruban adhésif suivant la revendication 1, **caractérisé en ce que** le support est une polyoléfine, un polyester, du PVC ou du papier.

8. Ruban adhésif suivant la revendication 1, **caractérisé en ce que** l'application massique de la masse adhésive est de 10 à 120 g/m².

9. Ruban adhésif suivant la revendication 1, **caractérisé en ce que**, pour améliorer l'ancrage de la masse, on opère un traitement physique du support ou on prétraite le support au moyen d'un apprêt.

10. Ruban adhésif suivant la revendication 1, **caractérisé en ce que** la dispersion de styrène /butadiène est du type d'une dispersion de styrène /butadiène carboxylée.

11. Ruban adhésif suivant la revendication 1, **caractérisé en ce que** la fraction de latex de caoutchouc naturel est de l'ordre de 5 à 80%, en particulier de 20 à 50%, par rapport à la teneur totale en solides.
